# EUROPEAN PATENT APPLICATION

(11) **EP 4 560 796 A1**
(43) Date of publication of application: **28.05.2025**
(21) Application number: 24195981.6
(22) Date of filing: 22.08.2024
(51) Int. Cl.: H01M 50/124, H01M 50/131, H01M 50/14

(54) **RECHARGEABLE BATTERY**

(30) Priority: 24.11.2023 KR 20230165158
(71) Applicant: SAMSUNG SDI CO., LTD., Giheung-gu Yongin-si, Gyeonggi-do 17084 (KR)
(72) Inventor: KIM, Jinbeom, 17084 Yongin-Si (KR); IN, Dongseok, 17084 Yongin-Si (KR)
(74) Representative: Marks & Clerk LLP

(57) **Abstract**

A rechargeable battery includes: an electrode assembly; a case to accommodate the electrode assembly; a hydrophilic layer on a first surface of the case; and a hydrophobic layer on a second surface of the case.

## Description

### BACKGROUND

### 1. Field

Aspects of embodiments of the present disclosure relate to a rechargeable battery.

### 2. Description of the Related Art

Rechargeable batteries may be charged and discharged, unlike primary batteries that may not be recharged. Rechargeable batteries having a low capacity are used for small, portable electronic devices, such as smartphones, feature phones, laptop computers, digital cameras, and camcorders. Rechargeable batteries having a high capacity are used as batteries for power storage and as a power supply for driving motors of hybrid vehicles, electric vehicles, and the like. Such rechargeable batteries each include an electrode assembly including a positive electrode and a negative electrode, a case accommodating the electrode assembly, electrode terminals connected to the electrode assembly, and the like.

Heat may be generated while the rechargeable batteries are being discharged and/or charged. In a state where heat is continuously generated, thermal runaway of the rechargeable batteries may occur, which may cause a fire in the devices or systems in which the rechargeable batteries are mounted.

The above information disclosed in this Background section is for enhancement of understanding of the background of the present disclosure, and therefore, it may contain information that does not constitute prior art.

### SUMMARY

Embodiments of the present disclosure may be directed to a rechargeable battery having a surface on which a hydrophilic layer and/or a hydrophobic layer is formed, and thus, fire extinguishing efficiency may be increased.

However, aspects and features of the present disclosure are not limited to those discussed above, and the above and other aspects and features of the present disclosure will be more clearly understood by those having ordinary skill in the art from the description that follows.

According to one or more embodiments of the present disclosure, a rechargeable battery includes: an electrode assembly; a case to accommodate the electrode assembly; a hydrophilic layer on a first surface of the case; and a hydrophobic layer on a second surface of the case.

In an embodiment, an area of the first surface of the case may be in a first area range; and an area of the second surface of the case may be in a second area range.

In an embodiment, the area of the first surface of the case may be greater than the area of the second surface of the case.

In an embodiment, the first surface of the case may include a side surface of the case.

In an embodiment, the second surface of the case may include an upper surface, for example of the battery or of the case.

In an embodiment, the first surface of the case may include at least one surface not including at least one of a vent portion or a terminal from among a plurality of surfaces of the case.

In an embodiment, the second surface of the case may include at least one surface including a vent portion or a terminal from among a plurality of surfaces of the case.

In an embodiment, the first surface of the case may be located in a first distance range from a nozzle through which a fire extinguishing liquid is sprayed; and the second surface of the case may be located in a second distance range from the nozzle.

In an embodiment, the rechargeable battery may further include a vent portion on one surface of the case, the hydrophilic layer may be further located on the second surface of the case, a first region in the second surface of the case on which the hydrophilic layer is further located may be in a third distance range from the vent portion, and a second region in the second surface of the case on which the hydrophobic layer is located is may be a fourth distance range from the vent portion.

In an embodiment, an angle between a water droplet and a surface of the hydrophilic layer may be 15 degrees or less; and an angle between a water droplet and a surface of the hydrophobic layer may be 100 degrees or more.

In an embodiment, the hydrophilic layer may include a hydrophilic film attached to the first surface of the case, or a hydrophilic paint applied to the first surface of the case; and the hydrophobic layer may include a hydrophobic film attached to the second surface of the case, or a hydrophilic paint applied to the second surface of the case.

In an embodiment, the hydrophobic film may include an insulating hydrophobic film; and the hydrophilic film may include an insulating hydrophilic film.

In an embodiment, the case may include: a first long side wall portion; a second long side wall portion opposite to and spaced from the first long side wall portion; a first short side wall portion; a second short side wall portion opposite to and spaced from the first short side wall portion, the first and second short side wall portions having areas less than areas of the first long side wall portion and the second long side wall portion; an open first surface; an open second surface opposite to the open first surface; a first cap plate covering the open first surface; and a second cap plate covering the open second surface; and a hydrophilic film or a hydrophilic paint may be on the first short side wall portion, the second short side wall portion, the first long side wall portion, and the second long side wall portion.

In an embodiment, a hydrophobic film may be on one of the first cap plate or the second cap plate, or a hydrophobic paint may be on one of the first cap plate or the second cap plate.

In an embodiment, the case may include a cylindrical can, and a cap assembly to seal the cylindrical can; and a hydrophilic film may be on the cylindrical can, or a hydrophilic paint may be on the cylindrical can.

In an embodiment, a hydrophobic film may be on a top plate of the cap assembly, or a hydrophobic paint may be on the top plate.

In an embodiment, the case may include a pouch; and a hydrophilic film may be on a side surface of the pouch, or a hydrophilic paint may be on the side surface of the pouch.

According to one or more embodiments of the present disclosure, a method of forming a hydrophilic layer and a hydrophobic layer in a rechargeable battery, includes: preparing a rechargeable battery; forming a hydrophilic layer on a first surface of the rechargeable battery; and forming a hydrophobic layer on a second surface of the rechargeable battery.

In an embodiment, the forming of the hydrophilic layer may include attaching a hydrophilic film to the first surface of the rechargeable battery. An angle between a water droplet and a surface of the hydrophilic film may be 15 degrees or less; and the first surface may include at least one surface not including at least one of a vent portion or a terminal from among a plurality of surfaces of the rechargeable battery.

In an embodiment, the forming of the hydrophobic layer may include attaching a hydrophobic film to the second surface of the rechargeable battery. An angle between a water droplet and a surface of the hydrophobic film may be 100 degrees or more; and the second surface may include at least one surface including at least one of a vent portion or a terminal from among a plurality of surfaces of the rechargeable battery.

At least some of the above and other features of the invention are set out in the claims.

However, the aspects and features of the present disclosure are not limited to those described above, and the above and other aspects and features will be set forth, in part, in the detailed description with reference to the drawings, and in part, may be apparent therefrom, or may be learned by practicing one or more of the presented embodiments of the present disclosure.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 illustrates an exploded perspective view of a part of an energy storage system according to some embodiments of the present disclosure;
FIG. 2 illustrates a perspective view of a rechargeable battery according to a first embodiment of the present disclosure;
FIG. 3 illustrates a cross-sectional view taken along the line II-II of FIG. 2;
FIG. 4 illustrates a perspective view of a rechargeable battery according to a second embodiment of the present disclosure;
FIG. 5 illustrates a cross-sectional view taken along the line II-II of FIG. 4;
FIG. 6 illustrates various examples of water droplet angles according to some embodiments of the present disclosure;
FIG. 7 illustrates an application of a fire extinguishing liquid onto a hydrophobic layer and a hydrophilic layer, according to some embodiments of the present disclosure;
FIG. 8 illustrates a rise of a fire extinguishing liquid on a hydrophilic surface, according to some embodiments of the present disclosure;
FIG. 9 illustrates a perspective view of a battery module according to some embodiments of the present disclosure;
FIG. 10 illustrates a perspective view of a rechargeable battery according to a third embodiment of the present disclosure;
FIG. 11 illustrates a cross-sectional view of the rechargeable battery of FIG. 10;
FIG. 12 illustrates a partial perspective view of a structure of a rechargeable battery according to a fourth embodiment of the present disclosure; and
FIG. 13 illustrates a flowchart of a method of forming a hydrophilic layer and a hydrophobic layer in a rechargeable battery, according to some embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively. Also, the term "exemplary" is intended to refer to an example or illustration.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A battery pack may include at least one battery module, and a pack housing having an accommodation space for accommodating the at least one battery module.

The battery module may include a plurality of battery cells and a module housing. The battery cells may be accommodated inside the module housing in a stacked form. A battery cell may include a positive lead and a negative lead. Depending on the shapes of batteries, round battery cells, square battery cells, or pouch-type battery cells may be used.

In the battery pack, a cell stack in which cells are stacked on one another may form one module instead of a battery module. The cell stack may be accommodated in an accommodation space of the pack housing, or may be accommodated in an accommodation space partitioned by a frame, a partition wall, or the like.

The battery cells generate a large amount of heat during charging/discharging. The generated heat accumulates in the battery cells and accelerates the degradation of the battery cells. Accordingly, the battery pack may further include a cooling member to prevent or substantially prevent the battery cells from being degraded. The cooling member may be provided at a lower portion of the accommodation space where the battery cells are installed, but the present disclosure is not limited thereto, and the cooling member may be provided at an upper portion or a side surface depending on the battery pack. The battery pack may further include a spray nozzle for spraying a fire extinguishing liquid in response to a situation where a fire or a thermal runaway occurs in a battery cell.

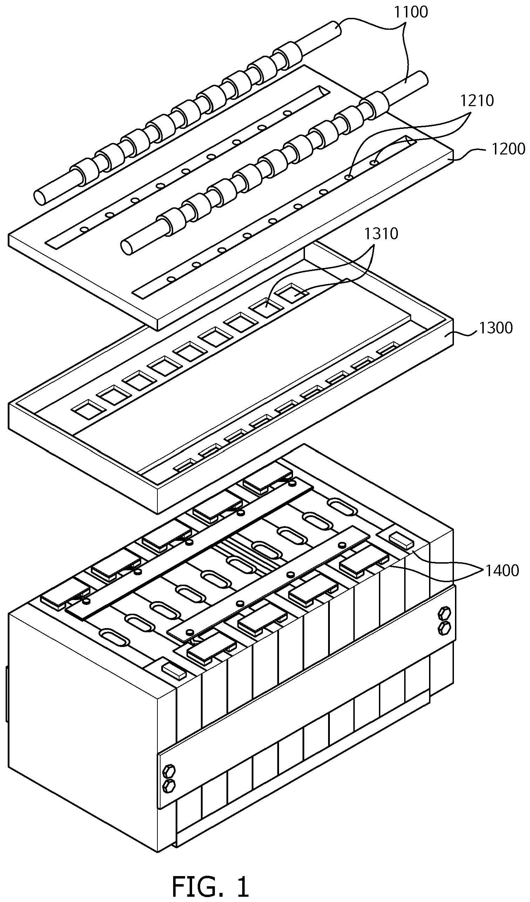

FIG. 1 illustrates an exploded perspective view of a part of an energy storage system according to some embodiments of the present disclosure. Referring to FIG. 1, the battery storage system may include a pipe (e.g., at least one pipe) 1100, an upper cover 1200, a lower cover 1300, and a plurality of battery cells 1400.

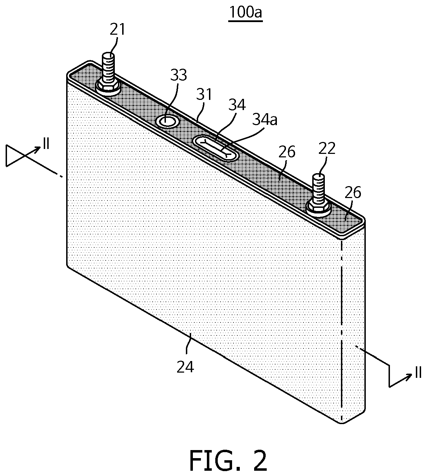

The battery cells 1400 may be charged and discharged, and heat may be generated during the charging/discharging. According to some embodiments, one or more hydrophilic layers may be formed on first surfaces of the battery cells 1400, and one or more hydrophobic layers may be formed on second surfaces of the battery cells 1400, so that the battery cells 1400 may be cooled in a case where a thermal runaway occurs in at least one of the battery cells 1400. Various examples of the hydrophilic layer and hydrophobic layer formed on the first and second surfaces, respectively, of the battery cell 1400 will be described in more detail below with reference to FIGS. 2 to 12.

The lower cover 1300 may be connected to (e.g., coupled to or attached to) upper portions of the battery cells 1400, and the upper cover 1200 may be connected to (e.g., coupled to or attached to) an upper portion of the lower cover 1300. A plurality of through holes 1210 and 1310, through which a fire extinguishing liquid may flow, may be correspondingly formed in each of the upper cover 1200 and lower cover 1300. Positions of the through holes 1210 formed in the upper cover 1200 may correspond to (e.g., may overlap with) positions of the through holes 1310 formed in the lower cover 1300. However, the present disclosure is not limited thereto, and the positions of the through holes 1210 formed in the upper cover 1200 may be different from (or may not overlap with) the positions of the through holes 1310 formed in the lower cover 1300.

One end of the pipe 1100 may be connected to a tank for storing the fire extinguishing liquid. Furthermore, a plurality of nozzles may be formed at a lower portion of the pipe 1100, and when a fire or a thermal runaway occurs in the battery cell 1400, the fire extinguishing liquid may be sprayed through the nozzles. The fire extinguishing liquid may be a suitable substance in a liquid form. The pipe 1100 may be spaced apart from the upper cover 1300 by a suitable distance (e.g., a predetermined distance), or may be positioned safely on an upper surface of the upper cover 1300.

When the fire extinguishing liquid is sprayed through the nozzles, the fire extinguishing liquid flows into the battery cells 1400 through the through holes 1210 and the through holes 1310 formed in the upper cover 1200 and the lower cover 1300, respectively. In this case, the fire extinguishing liquid may be applied to the second surfaces of the battery cells 1400 through the hydrophilic layers formed on the first surfaces of the battery cells 1400. Furthermore, the fire extinguishing liquid may be applied to the first surfaces of the battery cells 1400 through the hydrophilic layers formed on the first surfaces of the battery cells 1400, and may flow downward at the same time.

The fire extinguishing liquid may spread to an ignited battery cell as well as to adjacent battery cells, thereby extinguishing the ignited battery cell and preventing or substantially preventing heat from transferring to surrounding battery cells. The fire extinguishing liquid may be repeatedly sprayed to come into contact with the first and second surfaces of the battery cells 1400, and then flow downward. For example, the sprayed fire extinguishing liquid flows downward from the hydrophilic layers, while being applied to the first and second surfaces of the battery cells 1400. Furthermore, the fire extinguishing liquid that is sprayed at different angles from the nozzles may be applied to adjacent battery cells so that all ignited battery cells may be cooled, and also, heat propagation to adjacent battery cells may be blocked or reduced.

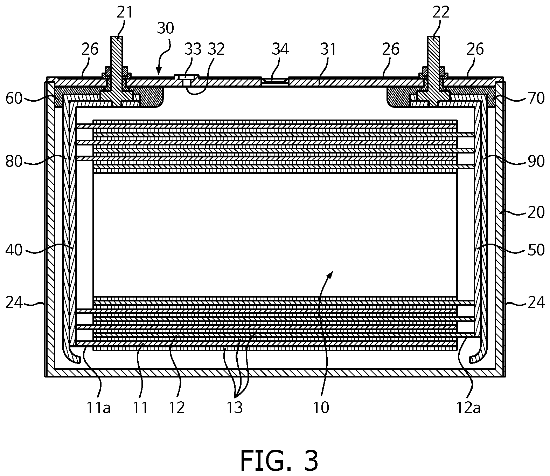

FIG. 2 illustrates a perspective view of a rechargeable battery 100a according to a first embodiment of the present disclosure. FIG. 3 illustrates a cross-sectional view taken along the line II-II of FIG. 2. For example, the rechargeable battery 100a may correspond to the battery cell 1400 of FIG. 1.

Referring to FIGS. 2 and 3, the rechargeable battery 100a according to the present embodiment may include an electrode assembly (e.g., at least one electrode assembly) 10 including a positive electrode 11, a negative electrode 12, and a separator 13, which is an insulator, between the positive electrode 11 and the negative electrode 12. The rechargeable battery 100a may further include a case 20 in which the electrode assembly 10 is accommodated, and a cap assembly 30 connected to (e.g., coupled to or attached to) an opening of the case 20. In some embodiments, the electrode assembly 10 may be built in the case 20.

The rechargeable battery 100a according to the present embodiment may be, for example, a lithium ion rechargeable battery having a square shape. However, the present disclosure is not limited thereto, and various suitable kinds of batteries may be applied, such as lithium polymer batteries or cylindrical batteries.

The positive electrode 11 and the negative electrode 12 may each include a coated portion that is a region where an active material is applied to a charge collector formed of a thin metal foil, and the positive electrode 11 and the negative electrode 12 may include uncoated regions (e.g., positive and negative uncoated regions 11a and 12a) that are regions where the active material is not applied.

The positive electrode 11, the negative electrode 12, and the separator 13, which is an insulator, therebetween are wound. However, the present disclosure is not limited thereto, and the electrode assembly 10 may have a structure in which positive electrodes formed of a plurality of sheets and negative electrodes formed of a plurality of sheets are alternately stacked with separators therebetween.

The case 20 forms the appearance (e.g., the entire or external appearance) of the rechargeable battery 100a, and may include (e.g., may be made of) a conductive metal, such as aluminum, an aluminum alloy, or a nickel-plated steel. Furthermore, the case 20 may provide a space in which the electrode assembly 10 is accommodated.

The cap assembly 30 may include a cap plate 31 that covers an opening of the case 20, and the case 20 and the cap plate 31 may include (e.g., may be made of) a conductive material. A positive electrode terminal 21 and a negative electrode terminal 22 electrically connected to the positive electrode 11 and the negative electrode 12, respectively, may protrude outward by passing through the cap plate 31.

Furthermore, outer peripheral surfaces of upper pillars of the positive and negative terminals 21 and 22 that protrude outward from the cap plate 31 may be threaded and fixed to the cap plate 31 with nuts.

However, the present disclosure is not limited thereto, and the positive and negative electrode terminals 21 and 22 may be riveted in a rivet structure, or may be welded to the cap plate 31.

Furthermore, the cap plate 31 may include (e.g., may be composed of) a thin plate, and may be connected to (e.g., coupled to or attached to) the opening of the case 20. An electrolyte injection hole 32 may be formed in the cap plate 31 where a sealing stopper 33 may be installed, and a vent portion 34 having a notch 34a may be installed in the cap plate 31.

The positive and negative electrode terminals 21 and 22 may be electrically connected to a charge collector including first and second charge collectors 40 and 50 (hereinafter referred to as positive and negative electrode charge collectors) welded to the positive and negative electrode uncoated portions 11a and 12a, respectively.

For example, the positive and negative electrode terminals 21 and 22 may be welded to the positive and negative charge collectors 40 and 50, respectively. However, the present disclosure is not limited thereto, and the positive electrode terminal 21 may be formed integrally with the positive charge collector 40, and the negative electrode terminal 22 may be formed integrally with the negative charge collector 50.

Furthermore, an insulating member may be provided between the electrode assembly 10 and the cap plate 31. The insulating member may include first and second lower insulating members 60 and 70, and each of the first and second lower insulating members 60 and 70 may be provided between the electrode assembly 10 and the cap plate 31.

According to the present embodiment, one end of a separation member that may be installed to face one side surface of the electrode assembly 10 may be provided between the insulating member and the positive or negative electrode terminal 21 or 22.

The separation member may include first and second separation members 80 and 90.

Accordingly, one end of the separation member 80 that may be installed to face one side surface of the electrode assembly 10 may be provided between the first lower insulating member 60 and the positive electrode terminal 21, and one end of the separation member 90 that may be installed to face one side surface of the electrode assembly 10 may be provided between the second lower insulating member 70 and the negative electrode terminal 22.

The positive and negative electrode terminals 21 and 22 welded to the positive and negative charge collectors 40 and 50, respectively, may each be connected to (e.g., coupled to or attached to) one end of a corresponding one of the first and second separation members 80 and 90 and one end of a corresponding one of the first and second lower insulating members 60 and 70.

According to the first embodiment, a hydrophilic layer 24 may be formed on the first surface of the case 20, and a hydrophobic layer 26 may be formed on the second surface of the case 20. For example, the first surface of the case 20 may include a side surface of the case 20, and the second surface of the case 20 may include an upper surface of the case 20.

According to some embodiments, the hydrophilic layer 24 may be formed on at least one surface on which the vent portion 34 is not formed or at least one of the negative and/or positive terminals 21 and 22 is not formed from among a plurality of surfaces of the case 20. Furthermore, the hydrophobic layer 26 may be formed on at least one surface on which the vent portion 34 is formed or at least one of the negative and/or positive terminals 21 and 22 is formed from among the surfaces of the case 20.

According to some embodiments, an area of the first surface of the case 20 on which the hydrophilic layer 24 is formed may be included in a first area range (e.g., a first predetermined area range). Furthermore, an area of the second surface of the case on which the hydrophobic layer 26 is formed may be included in a second area range (e.g., a predetermined second area range). For example, the area of the first surface of the case 20 may be greater than the area of the second surface of the case 20.

According to some embodiments, the hydrophilic layer 24 and the hydrophobic layer 26 may be formed on the case 20 based on a distance to a nozzle formed in a pipe. For example, the first surface of the case 20 on which the hydrophilic layer 24 is formed may be positioned in a first distance range from the nozzle through which the fire extinguishing liquid is sprayed. Furthermore, the second surface of the case 20 on which the hydrophobic layer 26 is formed may be positioned in a second distance range from the nozzle. For example, the second distance range may include a shorter distance than that in the first distance range.

According to some embodiments, the hydrophilic layer 24 may be formed by attaching a hydrophilic film or by applying a hydrophilic paint to the first surface of the case 20. Furthermore, the hydrophobic layer 26 may be formed by attaching a hydrophobic film or by applying a hydrophobic paint to the second surface of the case 20. For example, the hydrophobic film may be an insulating hydrophobic film, and the hydrophilic film may be an insulating hydrophilic film.

According to the present embodiment, when the fire extinguishing liquid is sprayed on the hydrophilic layer 24 formed on the first surface of the case 20, the fire extinguishing liquid may flow downward while being applied to the first surface, and accordingly, heat generated in the rechargeable battery 100a may be cooled. Furthermore, when the fire extinguishing liquid is sprayed onto the hydrophobic layer 26 formed on the second surface of the case 20, water droplets may be formed on the second surface at an angle (e.g., a predetermined angle), and the flowing of the fire extinguishing liquid may be suppressed, and thus, the fire extinguishing liquid may be prevented or substantially prevented from flowing into the rechargeable battery 100a.

In some embodiments, based on a position of the vent portion 34, a hydrophobic layer and a hydrophilic layer may be formed in a more complex manner on the second surface.

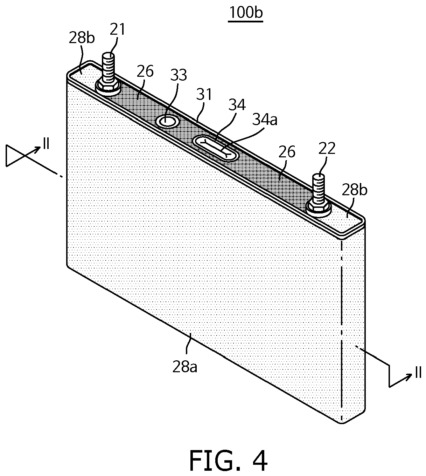

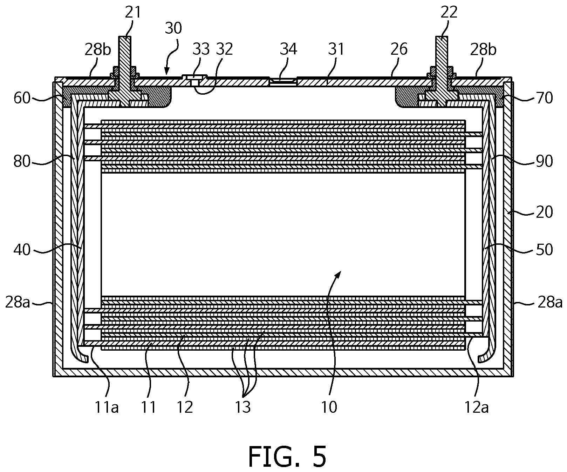

FIG. 4 illustrates a perspective view of a rechargeable battery 100b according to a second embodiment of the present disclosure. FIG. 5 illustrates a cross-sectional view taken along the line II-II of FIG. 4. For example, the rechargeable battery 100b may correspond to the battery cell 1400 of FIG. 1.

Referring to FIG. 4, a hydrophilic layer 28a may be formed on a first surface of the rechargeable battery 100b. Furthermore, a hydrophilic layer 28b and a hydrophobic layer 26 may be formed in a complex manner on a second surface (e.g., an upper surface) of the rechargeable battery 100b. As illustrated in FIGS. 4 and 5, the hydrophilic layer 28b and the hydrophobic layer 26 may be formed in a complex manner on the second surface of the case 20 where the vent portion 34 is formed.

The hydrophilic layer 28b may be formed at (e.g., in or on) a first region of the second surface on which a distance from the vent portion 34 is included in a third distance range. The hydrophobic layer 26 may be formed at (e.g., in or on) a second region of the second surface on which a distance from the vent portion 34 is included in a fourth distance range. In other words, the first region included in the second surface of the case 20 where the hydrophilic layer 28b is formed may be positioned in the third distance range from the vent portion 34, and the second region included in the second surface of the case 20 where the hydrophobic layer 26 is formed may be positioned in the fourth distance range from the vent portion 34. The fourth distance range may include a shorter distance than those in the third distance range.

According to the present embodiment, in a state where the vent portion 34 is cut and the inside of the rechargeable battery 100b is opened, the hydrophobic layer 26 formed in the second region closer to the vent portion 34 may reduce an amount of the fire extinguishing liquid flowing into the rechargeable battery 100b. Furthermore, the hydrophilic layer 28b formed in the first region farther away from the vent portion 34 may cause the fire extinguishing liquid to flow downward, and the temperatures of the other surfaces may be lowered through the flowing fire extinguishing liquid.

The hydrophilic layer 28b may be formed on the second surface at a position relatively farther away from the vent portion 34 (i.e. on the second surface), and the hydrophobic layer 26 may be formed on the second surface at a position relatively closer to the vent portion 34 (i.e. on the second surface), and accordingly, even in a state where the vent portion 34 is cut due to overheating, the amount of fire extinguishing liquid flowing into the battery cell may be reduced.

In some embodiments, the case 20 may include a first long side wall portion and a second long side wall portion opposite to each other and spaced (e.g., separated) from each other. The case 20 may further include a first short side wall portion and a second short side wall portion opposite to each other and spaced (e.g., separated) from each other. The first short side wall portion and the second short side wall portion may have areas less than (i.e. smaller than) areas of the first long side wall portion and the second long side wall portion. The case 20 may further include an open first surface, an open second surface opposite to the open first surface, a first cap plate covering the open first surface, and a second cap plate covering the open second surface. For example, a hydrophilic film may be attached to, or a hydrophilic paint may be applied to, the first short side wall portion, the second short side wall portion, the first long side wall portion, and the second long side wall portion, and thus, a hydrophilic layer may be formed at (e.g., in or on) the first short side wall portion, the second short side wall portion, the first long side wall portion, and the second long side wall portion. Additionally, a hydrophobic film may be attached to the first cap plate or the second cap plate or a hydrophobic paint may be applied to the first cap plate or the second cap plate to form a hydrophobic layer on the first cap plate or the second cap plate.

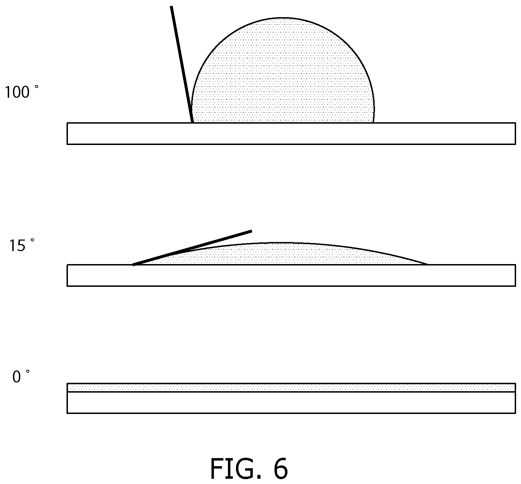

FIG. 6 illustrates various examples of water droplet angles according to some embodiments of the present disclosure. Referring to FIG. 6, a water droplet angle may be calculated relative to a horizontal line of a surface. FIG. 6 illustrates water droplets that are formed on the surface, and having angles of 95 degrees, 15 degrees, and 0 degrees.

As the angle increases, relatively larger water droplets may be formed on the surface. An angle of a water droplet on a hydrophobic layer may be greater than an angle of a water droplet on a hydrophilic layer. According to some embodiments of the present disclosure, an angle between a water droplet associated with the hydrophilic layer and the second surface may be 15 degrees or less. In other words, an angle of a water droplet formed on the hydrophilic layer may be 15 degrees or less. Furthermore, an angle between a water droplet associated with the hydrophobic layer and the second surface may be greater than or equal to 100 degrees. In other words, the angle of a water droplet formed on the hydrophobic layer may be 100 degrees or more.

Accordingly, on the hydrophilic layer, the fire extinguishing liquid may be evenly or substantially evenly applied onto the surface of the battery cell, and a larger amount of the fire extinguishing liquid may be applied as it will be retained on the surface for a longer time. As such, cooling efficiency may be increased (e.g., it may be greatly increased). In some embodiments, the fire extinguishing liquid may not accumulate on the hydrophobic layer, or quickly disperses off it.

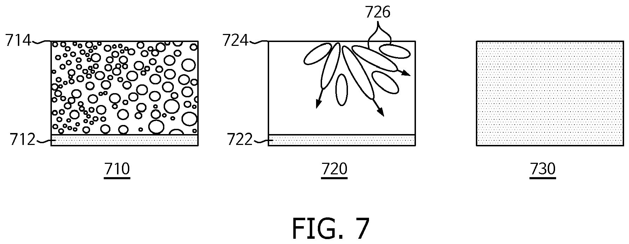

FIG. 7 illustrates an application of a fire extinguishing liquid onto a hydrophobic layer and a hydrophilic layer, according to some embodiments of the present disclosure. A first example 710 illustrated in FIG. 7 may be associated with a hydrophobic layer. A second example 720 and a third example 730 illustrated in FIG. 7 may be associated with a hydrophilic layer. Furthermore, FIG. 7 illustrates that a fire extinguishing liquid is positioned below a surface. For example, the fire extinguishing liquid 712 sprayed on the surface and flowing down from the surface may be positioned in a lower region of the surface.

Referring to the first example 710 of FIG. 7, in a state where the fire extinguishing liquid is sprayed, a plurality of water droplets having an angle of 100 degrees or more may be formed on a surface 714 on which a hydrophobic layer is formed. In other words, the fire extinguishing liquid may be applied onto the surface 714 in the form of water droplets having an angle of 100 degrees or more. Furthermore, some of the extinguishing liquid 712 that is not applied to the surface 714 may be positioned in a lower region.

Referring to the second example 720 of FIG. 7, in a state where the fire extinguishing liquid is sprayed, a plurality of water droplets having an angle of 15 degrees or less may be formed on the surface 724 on which a hydrophilic layer is formed. Furthermore, the fire extinguishing liquid 726 applied to the surface 724 on which the hydrophilic layer is formed spreads to an uncoated region, and thereby, as shown in the third example 730 of FIG. 7, an entirety of the surface 724 of the hydrophilic layer may be coated with the fire extinguishing liquid. In other words, even in a state where the fire extinguishing liquid 726 is sprayed on only some regions of the hydrophilic layer, the fire extinguishing liquid spreads to other regions of the hydrophilic layer that are not coated due to a surface tension of the hydrophilic layer, and thereby, the fire extinguishing liquid 726 may be applied to the entire or substantially entire region of the hydrophilic layer.

Accordingly, even in a state where the fire extinguishing liquid is sprayed on only a part of the first surface of the case on which the hydrophilic layer is formed, the fire extinguishing liquid may spread to the entire, or substantially entire, region of the first surface of the case, and thus, heat of a rechargeable battery may be quickly cooled. Therefore, a case in which the hydrophilic layer is formed may have better cooling performance using the fire extinguishing liquid than that of a case in which the hydrophobic layer is formed.

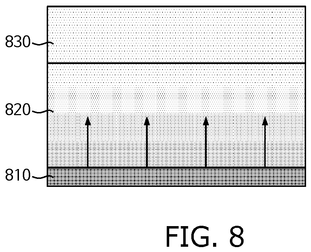

FIG. 8 illustrates a rise of a fire extinguishing liquid on a hydrophilic surface, according to some embodiments of the present disclosure. Referring to FIG. 8, even in a state where the fire extinguishing liquid is sprayed or positioned in a lower region of a first surface of a case in which a hydrophilic layer is formed, the fire extinguishing liquid may spread to the entire, or substantially entire, region of the first surface.

In FIG. 8, a first region 810 may be a region in which the fire extinguishing liquid is applied, and a second region 820 may be a region in which the fire extinguishing liquid of the first area 810 is spread and applied. On the hydrophilic layer, the fire extinguishing liquid rises from the first region 810, and spreads to other regions due to a surface tension. Due to the surface tension, a third region 830 onto which the fire extinguishing liquid is not applied (e.g., is not sprayed) may also be coated with the fire extinguishing liquid as time passes.

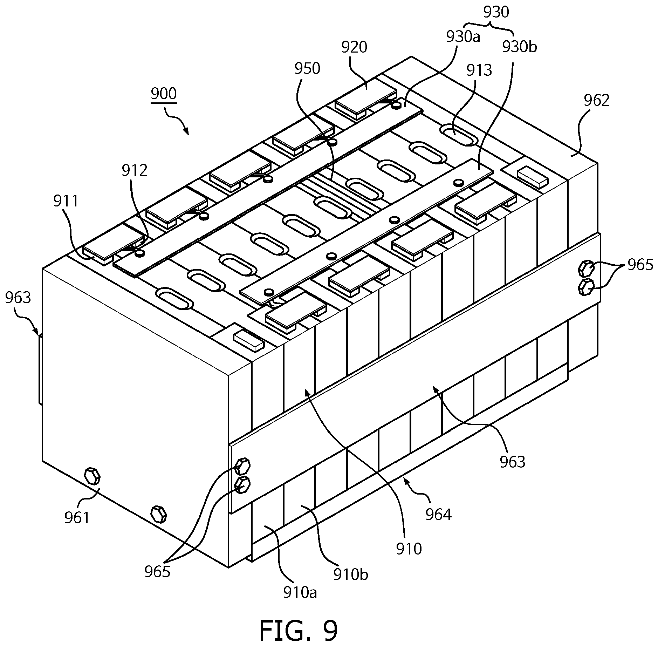

FIG. 9 illustrates a perspective view of a battery module 900 according to some embodiments of the present disclosure.

Referring to FIG. 9, the battery module 900 according to the present embodiment may include electrode portions 911 and 912, a plurality of battery cells 910 arranged along one direction, a connection tab 920 connecting a battery cell 910a to an adjacent battery cell 910b, and a protection circuit module (e.g., a protection circuit) 930 having one end connected to the connection tab 920. The protection circuit module 930 may include (e.g., may be) a battery management system (BMS). In some embodiments, the connection tab 920 may include a body portion in contact with the electrode portions 911 and 912 between adjacent battery cells 910a and 91 0b, and an extension portion extending from the body portion and connected to the protection circuit module 930. The connection tab 920 may include (e.g., may be) a bus bar.

The battery cell 910 may include a battery case, an electrode assembly accommodated in (e.g., built in) the battery case, and an electrolyte. The electrode assembly and the electrolyte may react electrochemically to generate energy. One side of the battery cell 910 may include the terminal portions 911 and 912 electrically connected to the connection tab 920, and a vent 913 that is a passage for discharging gas that may be generated inside the battery cell 910. The terminal portions 911 and 912 of the battery cell 910 may be a positive terminal 911 and a negative terminal 912, respectively, having different polarities from each other. The terminal portions 911 and 912 of adjacent battery cells 910 may be electrically connected in series or in parallel by the connection tabs 920. However, the present disclosure is not limited to the connection structure described above, and various suitable connection structures may be adopted as needed or desired. Furthermore, the number and the arrangement of the battery cells are not limited to those illustrated in FIG. 9, and may be variously modified as needed or desired.

The battery cell 910 illustrated in FIG. 9 may correspond to the battery cell described above with reference to at least one of FIGS. 2 to 5. For example, a hydrophilic layer may be formed on a first surface of the battery case, and a hydrophobic layer may be formed on a second surface of the battery case.

The battery cells 910 may be arranged along the one direction, such that wider surfaces of the battery cells 910 face each other, and the arranged battery cells 910 may be fixed by housings 961, 962, 963, and 964. The housings 961, 962, 963, and 964 may include a pair of end plates 961 and 962 facing the wider surfaces of the battery cells 910, a side plate 963 connecting the pair of end plates 961 and 962 to each other, and a bottom plate 964. The side plate 963 may support a side surface of the battery cell 910, and the bottom plate 964 may support a bottom surface of the battery cell 910. Furthermore, the pair of end plates 961 and 962, the side plate 963, and the bottom plate 964 may be connected to one another by a suitable member, such as a bolt 965. According to one or more embodiments of the present disclosure, a hydrophilic layer may be formed on inner surfaces of the housings 961, 962, 963, and 964. For example, a hydrophilic film may be attached to or a hydrophilic paint may be applied to the inner surfaces of the housings 961, 962, 963, and 964. Even if overheating occurs in the battery module 900, heat may be prevented or substantially prevented from being transferred to the outside of the battery module 900 by the hydrophilic layer formed on the inner surfaces of the housings 961, 962, 963, and 964.

The protection circuit module 930 may include electronic components and a protection circuit, and may be electrically connected to the connection tab 920. The protection circuit module 930 may include a first protection circuit module (e.g., a first protection circuit) 930a and a second protection circuit module (e.g., a second protection circuit) 930b extending from different positions from each other in a direction in which the battery cells 910 are arranged. In this case, the first protection circuit module 930a and the second protection circuit module 930b may be spaced (e.g., separated) from each other by a suitable distance (e.g., a predetermined distance), and may be parallel to, or substantially parallel to, each other to be respectively and electrically connected to adjacent connection tabs 920. For example, the first protection circuit module 930a may be formed to extend on one upper side of the battery cells 910 in the direction in which the battery cells 910 are arranged, and the second protection circuit module 930b may be formed to extend on another upper side of the battery cells 910 in the direction in which the battery cells 910 are arranged. The second protection circuit module 930b may be spaced (e.g., separated) from the first protection circuit module 930a at a suitable distance (e.g., a predetermined distance), with the vent 913 therebetween, and may be arranged parallel to or substantially parallel to the first protection circuit module 930a. As such, the two protection circuit modules 930a and 930b are arranged side by side relative to each other, and are spaced (e.g., separated) from each other in a direction in which the battery cells are arranged. Accordingly, an area of a printed circuit board (PCB) constituting the protection circuit modules 930a and 930b may be reduced. By providing two separate protection circuit modules, an unnecessary PCM area is reduced. Furthermore, the first protection circuit module 930a may be connected to the second protection circuit module 930b by a conductive connection member 950. For example, one side or end of the connection member 950 may be connected to the first protection circuit module 930a, and another side or end of the connection member 950 may be connected to the second protection circuit module 930b, and thus, the first and second protection circuit modules 930a and 930b may be electrically connected to each other.

A connection may be made by any of various suitable connection methods, such as soldering, resistance welding, laser welding, and/or projection welding.

In some embodiments, the connection member 950 may include (e.g., may be), for example, an electric wire. Furthermore, the connection member 950 may be formed of an elastic or flexible material. Normality of voltages, temperatures, and currents of the battery cells 910 may be checked and managed by the connection member 950. In other words, information on the voltages, the currents, and the temperatures that the first protective circuit module 930a receives from the connection tabs 920 adjacent to the first protective circuit module 930a, and information on the voltages, the currents, and the temperatures that the second protective circuit module 930b receives from the connection tabs 920 adjacent to the second protective circuit module 930b may be integrated and managed by the protection circuit module 930.

Furthermore, during swelling of the battery cell 910, shock may be absorbed by the connection member 950 due to the elasticity or flexibility of the connection member 950, and thus, the first and second protection circuit modules 930a and 930b may be prevented or substantially prevented from being damaged.

However, a shape and a structure of the connection member 950 are not limited to the shape and the structure described above with reference to FIG. 9.

By providing two separate protection circuit modules including the first protection circuit module 930a and the second protection circuit module 930b, an area of a PCB constituting the protection circuit modules may be reduced, and a space may be provided inside the battery module. Accordingly, not only a fastening work of connecting protection circuit modules to each other but also repairing an abnormal battery module may be more easily performed, and thus, work efficiency may be increased.

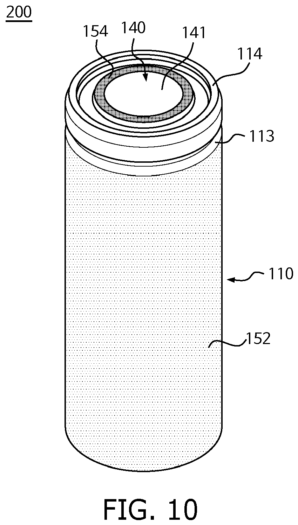

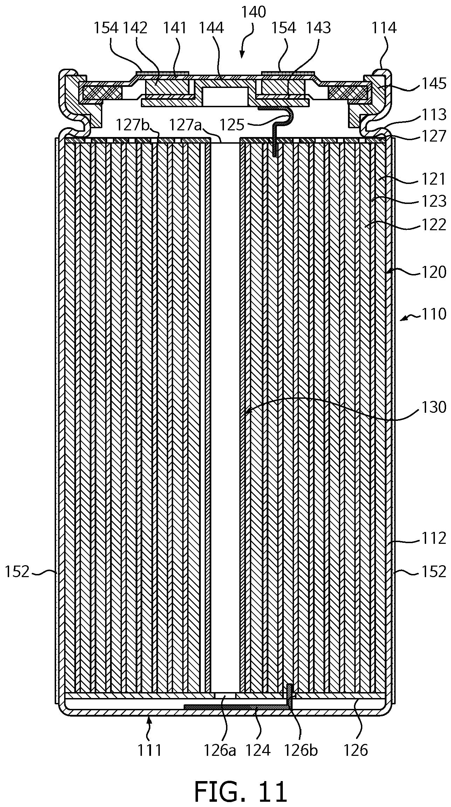

FIG. 10 illustrates a perspective view of a rechargeable battery 200 according to a third embodiment of the present disclosure. FIG. 11 illustrates a cross-sectional view of the rechargeable battery 200 of FIG. 10.

As illustrated in FIGS. 10 and 11, a cylindrical lithium ion rechargeable battery 200 according to the third embodiment of the present disclosure may include a cylindrical can 110, an electrode assembly 120, and a cap assembly 140. The cylindrical lithium ion rechargeable battery 200 may further include a center pin 130 as needed or desired. Furthermore, in the rechargeable battery 200 according to some embodiments of the present disclosure, the cap assembly 140 may also perform a current interrupt operation, and accordingly, the cap assembly 140 may be sometimes referred to as a current interrupt device.

The cylindrical can 110 may include a circular or substantially circular bottom portion 111, and a cylindrical side wall 112 extending a certain length from a periphery of the bottom portion 111 toward an upper portion. During a manufacturing process of the rechargeable battery 200, an upper portion of the cylindrical can 110 is open. Accordingly, during an assembly process of the rechargeable battery 200, the electrode assembly 120 and the center pin 130 may be inserted into the cylindrical can 110 together with an electrolyte. The cylindrical can 110 may include (e.g., may be made of), for example, steel, stainless steel, aluminum, an aluminum alloy, or equivalents thereof, but the present disclosure is not limited thereto.

Furthermore, the cylindrical can 110 may include a beading portion 113 recessed inward at a lower portion of the beading portion 113 around the cap assembly 140 to prevent or substantially prevent the cap assembly 140 from being released to the outside, and a crimping portion 114 bent inward on an upper portion of the cylindrical can 110, above the beading portion 113.

The electrode assembly 120 may be accommodated inside the cylindrical can 110. The electrode assembly 120 may include a negative electrode plate 121 having a negative electrode charge collection plate coated with a negative electrode active material (e.g., graphite, carbon, or the like), a positive electrode plate 122 having a positive electrode charge collection plate coated with a positive electrode active material (e.g., transition metal oxide (LiCoO₂, LiNiO₂, LiMn₂O₄, or the like)), and a separator 123 positioned between the negative electrode plate 121 and the positive electrode plate 122 to prevent or substantially prevent a short circuit and only allow movement of lithium ions. Furthermore, the negative electrode plate 121, the positive electrode plate 122, and the separator 123 may each have a cylindrical or substantially cylindrical shape once wound. For example, the negative electrode charge collection plate may be formed of a copper (Cu) foil, the positive electrode charge collection plate may be formed of an aluminum (Al) foil, and the separator may be formed of polyethylene (PE) or polypropylene (PP), but the present disclosure is not limited thereto.

Furthermore, a negative electrode tab 124 protruding and extending downward by a certain length may be welded to the negative electrode plate 121, and a positive electrode tab 125 protruding and extending upward by a certain length may be welded to the positive electrode plate 122, but the opposite may also be possible. Furthermore, for example, the negative electrode tab 124 may be formed of copper (Cu) or nickel (Ni), and the positive electrode tab 125 may be formed of aluminum (Al), but the present disclosure is not limited thereto.

The negative electrode tab 124 of the electrode assembly 120 may be welded to the bottom portion 111 of the cylindrical can 110. Therefore, the cylindrical can 110 may operate as a negative electrode. On the other hand, the positive electrode tab 125 may be welded to the bottom portion 111 of the cylindrical can 110, and in this case, the cylindrical can 110 may operate as a positive electrode.

A first insulating plate 126, which is connected to (e.g., coupled to or attached to) the cylindrical can 110 and has a first hole 126a in the center and a second hole 126b in the outside, may be provided between the electrode assembly 120 and the bottom portion 111. The first insulating plate 126 serves to prevent or substantially prevent the electrode assembly 120 from electrically coming into contact with the bottom portion 111 of the cylindrical can 110. In more detail, the first insulating plate 126 serves to prevent or substantially prevent the positive electrode plate 122 of the electrode assembly 120 from electrically coming into contact with the bottom portion 111. In a case where a large amount of gas is generated due to an abnormality of a rechargeable battery, the first hole 126a serves to quickly move the gas upward through the center pin 130, and the second hole 126b serves to allow the negative electrode tab 124 to pass therethrough to be welded to the bottom portion 111.

A second insulating plate 127, which is connected to (e.g., coupled to or attached to) the cylindrical can 110 and has a first hole 127a in the center and has multiple second holes 127b in the outside, may be provided between the electrode assembly 120 and the cap assembly 140. This second insulating plate 127 serves to prevent or substantially prevent the electrode assembly 120 from electrically coming into contact with the cap assembly 140. In more detail, the second insulating plate 127 serves to prevent or substantially prevent the negative electrode plate 121 of the electrode assembly 120 from electrically coming into contact with the cap assembly 140. In a case where a large amount of gas is generated due to an abnormality of a rechargeable battery, the first hole 127a serves to quickly move the gas to the center pin 130, and at least one of the second holes 127b serves to allow the positive electrode tab 125 to pass therethrough to be welded to the cap assembly 140. Furthermore, the other second holes 127b serve to allow an electrolyte to quickly flow into the electrode assembly 120 during an electrolyte injection process.

Diameters of the first holes 126a and 127a of the first and second insulating plates 126 and 127 are formed to be smaller than a diameter of the center pin 130, and accordingly, the center pin 130 may be prevented or substantially prevented from electrically coming into contact with the bottom portion 111 of the cylindrical can 110 or the cap assembly 140 due to an external impact.

The center pin 130 has a shape of a hollow circular pipe, and may be connected to (e.g., coupled to or attached to) approximately the center of the electrode assembly 120. The center pin 130 may be formed of, for example, steel, stainless steel, aluminum, an aluminum alloy, or polybutylene terephthalate, but the present disclosure is not limited thereto. The center pin 130 serves to suppress deformation of the electrode assembly 120 during charging and discharging of a battery, and serves as a passage for moving the gas generated inside the rechargeable battery. In some cases, the center pin 130 may be omitted as needed or desired.

The cap assembly 140 may include a top plate 141, a middle plate 142, an insulating plate 143, and a bottom plate 144.

The middle plate 142 is positioned below the top plate 141 and may have a flat or substantially flat shape.

The insulating plate 143 may be formed in a circular ring shape with a certain width when viewed from the bottom. Furthermore, the insulating plate 143 serves to insulate the middle plate 142 from the bottom plate 144. For example, the insulating plate 143 may be sandwiched between the middle plate 142 and the bottom plate 144 and ultrasonically welded, but the present disclosure is not limited thereto.

According to one or more embodiments of the present disclosure, a hydrophilic layer 152 may be formed on a first surface of a case of the rechargeable battery 200, and a hydrophobic layer 154 may be formed on a second surface of the case. For example, a hydrophilic film may be attached to the cylindrical can 110 or a hydrophilic paint may be applied thereto to form the hydrophilic layer 152 on the first surface of the case. Furthermore, a hydrophobic film may be attached to the top plate 141 included in the cap assembly 140 or a hydrophobic paint may be applied thereto to form the hydrophobic layer 154 on the second surface of the case. According to some embodiments, the hydrophobic layer 154 may be formed in a partial region of the top plate 141.

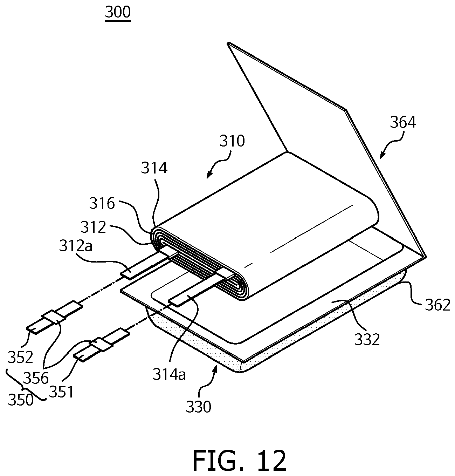

FIG. 12 illustrates a partial perspective view of a structure of a rechargeable battery according to a fourth embodiment of the present disclosure. As illustrated in FIG. 12, a rechargeable battery 300 according to the fourth embodiment of the present disclosure may include an electrode assembly 310, and a pouch 330 for accommodating the electrode assembly 310.

The electrode assembly 310 may include a negative electrode plate 312 which is a first electrode plate, a positive electrode plate 314 which is a second electrode plate, and a separator 316 provided therebetween. The negative electrode plate 312 may include a negative electrode tab 312a electrically connected to a negative electrode uncoated portion, and the positive electrode plate 314 may include a positive electrode tab 314a electrically connected to a positive electrode uncoated portion. The negative electrode tab 312a and the positive electrode tab 314a may be respectively welded to a negative lead 352 and a positive lead 354 of an external terminal to be electrically connected to the outside. Tab films 356 may be respectively attached to the negative lead 352 and the positive lead 354 to insulate the negative lead 352 and the positive lead 354 from the pouch 330.

The pouch 330 is sealed by sealing portions 332 at edges that come into contact with each other in a state where the electrode assembly 310 is accommodated in the pouch 330. For example, the sealing is made in a state where the tab films 356 are arranged between the sealing portions 332. As illustrated in FIG. 12, a form in which the tab films 356 are respectively attached to the negative electrode tab 312a and the positive electrode tab 314a is defined as a "separate tab film" (e.g., this sealing structure is defined as a separate sealing structure).

The sealing portions 332 of the pouch 330 may be formed of a heat-fusing material, and may have a structure in which sealing is made by bonding heat-fused layers to each other. The heat-fusing material generally has a weak bonding strength to metal, and accordingly, the tab film 356 of a thin film shape is attached to a tab and fused to the pouch 330. However, the separate sealing structure may have poor workability and low productivity, because the tab film 356 is attached and welded to each tab and is heat-fused again with the pouch 330.

According to one or more embodiments of the present disclosure, a hydrophilic layer 362 may be formed on a first surface of a case of the rechargeable battery 300, and a hydrophobic layer 364 may be formed on a second surface of the case. For example, a hydrophilic film may be attached to an outer surface of the pouch 330 or a hydrophilic paint may be applied thereto to form the hydrophilic layer 362 on the first surface of the case of the rechargeable battery 300. Furthermore, a hydrophobic film may be attached to an outer upper surface of the pouch 330 or a hydrophobic paint may be applied thereto to form the hydrophobic layer 364 on the second surface of the case.

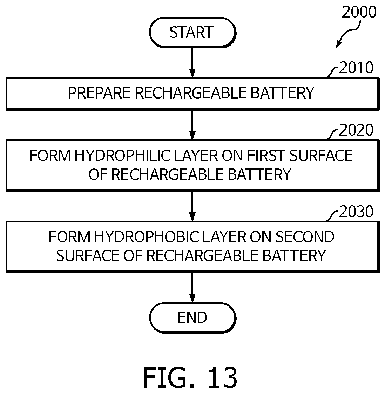

FIG. 13 illustrates a flowchart of a method 2000 of forming a hydrophilic layer and a hydrophobic layer in a rechargeable battery, according to some embodiments of the present disclosure. The method 1300 of forming the hydrophilic layer and the hydrophobic layer may start, and the rechargeable battery may be prepared (2010). The rechargeable battery may include one or more rechargeable batteries of various suitable shapes, such as a prismatic shape, a cylindrical shape, and/or a pouch shape.

The hydrophilic layer may be formed on a first surface of the rechargeable battery (2020). According to some embodiments, a hydrophilic film in which an angle between a water droplet and a surface is 15 degrees or less may be attached to the first surface of the rechargeable battery. The first surface may include at least one surface on which at least one of a vent portion and/or a terminal is not formed among a plurality of surfaces of the rechargeable battery.

Thereafter, the hydrophobic layer may be formed on a second surface of the rechargeable battery (2030), and the method 2000 may end. According to some embodiments, the hydrophobic film in which an angle between a water droplet and a surface is 100 degrees or more may be attached to the second surface of the rechargeable battery. The second surface may include at least one surface on which at least one of a vent portion and/or a terminal is formed among the surfaces of the rechargeable battery.

According to one or more embodiments of the present disclosure, the temperature of an overheated rechargeable battery may be quickly lowered through a hydrophobic layer and/or a hydrophilic layer formed on a surface of the rechargeable battery, and thus, fire may be prevented or substantially prevented from spreading to adjacent rechargeable batteries/devices.

According to one or more embodiments of the present disclosure, a fire extinguishing liquid may not immediately flow downward on a specific surface of a rechargeable battery on which a hydrophobic layer is formed, and may maintain or substantially maintain an applied state in the form of water droplets, and thus, the fire extinguishing liquid may be prevented or substantially prevented from flowing into battery cells of the rechargeable batteries. Accordingly, short circuits in electrical circuits and the like due to the fire extinguishing liquid may be prevented or substantially prevented.

According to one or more embodiments of the present disclosure, a rechargeable battery in which a thermal runaway occurs may be quickly cooled through a hydrophilic layer formed on a surface of the rechargeable battery, and a fire extinguishing liquid may be quickly discharged.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A rechargeable battery comprising:
an electrode assembly (10);
a case (20) to accommodate the electrode assembly (10);
a hydrophilic layer (24) on a first surface of the case (20); and
a hydrophobic layer (26) on a second surface of the case (20).

2. The rechargeable battery as claimed in claim 1, wherein:
an area of the first surface of the case (20) is in a first area range; and
an area of the second surface of the case (20) is in a second area range.

3. The rechargeable battery as claimed in claim 2, wherein the area of the first surface of the case (20) is greater than the area of the second surface of the case (20).

4. The rechargeable battery as claimed in any one of the preceding claims, wherein the first surface of the case (20) comprises a side surface of the case.

5. The rechargeable battery as claimed in any one of the preceding claims, wherein the second surface of the case (20) comprises an upper surface.

6. The rechargeable battery as claimed in any one of the preceding claims, wherein the first surface of the case (20) comprises at least one surface not including at least one of a vent portion (34) or a terminal (911, 912) from among a plurality of surfaces of the case (20).

7. The rechargeable battery as claimed in any one of the preceding claims, wherein the second surface of the case (20) comprises at least one surface including a vent portion (34) or a terminal (911, 912) from among a plurality of surfaces of the case.

8. The rechargeable battery as claimed in any one of the preceding claims, wherein:
the first surface of the case (20) is located in a first distance range from a nozzle through which a fire extinguishing liquid is sprayed; and
the second surface of the case (20) is located in a second distance range from the nozzle.

9. The rechargeable battery as claimed in any one of the preceding claims, further comprising a vent portion (34) on one surface of the case (20),
wherein the hydrophilic layer (24) is further located on the second surface of the case (20),
wherein a first region in the second surface of the case (20) on which the hydrophilic layer (24) is further located is in a third distance range from the vent portion (34), and
wherein a second region in the second surface of the case (20) on which the hydrophobic layer (26) is located is in a fourth distance range from the vent portion (34).

10. The rechargeable battery as claimed in any one of the preceding claims, wherein:
an angle between a water droplet and a surface of the hydrophilic layer (24) is 15 degrees or less; and
an angle between a water droplet and a surface of the hydrophobic layer (26) is 100 degrees or more.

11. The rechargeable battery as claimed in any one of the preceding claims, wherein:
the hydrophilic layer (24) comprises a hydrophilic film attached to the first surface of the case (20), or a hydrophilic paint applied to the first surface of the case (20); and
the hydrophobic layer (26) comprises a hydrophobic film attached to the second surface of the case (20), or a hydrophilic paint applied to the second surface of the case (20).

12. The rechargeable battery as claimed in claim 11, wherein:
the hydrophobic film comprises an insulating hydrophobic film; and
the hydrophilic film comprises an insulating hydrophilic film.

13. The rechargeable battery as claimed in any one of the preceding claims, wherein:
the case (20) comprises:
a first long side wall portion;
a second long side wall portion opposite to and spaced from the first long side wall portion;
a first short side wall portion;
a second short side wall portion opposite to and spaced from the first short side wall portion, the first and second short side wall portions having areas less than areas of the first long side wall portion and the second long side wall portion;
an open first surface;
an open second surface opposite to the open first surface;
a first cap plate (31) covering the open first surface; and
a second cap plate (31) covering the open second surface; and
a hydrophilic film or a hydrophilic paint is on the first short side wall portion, the second short side wall portion, the first long side wall portion, and the second long side wall portion.

14. The rechargeable battery as claimed in claim 13, wherein a hydrophobic film is on one of the first cap plate (31) or the second cap plate (31), or a hydrophobic paint is on one of the first cap plate or the second cap plate.

15. The rechargeable battery as claimed in any one of claims 1 to 12, wherein:
the case (20) comprises a cylindrical can (110), and a cap assembly (140) to seal the cylindrical can (110); and
a hydrophilic film is on the cylindrical can (110), or a hydrophilic paint is on the cylindrical can (110).
